(19) Europäisches Patentamt / European Patent Office / Office européen des brevets

(11) **EP 4 453 551 B1**

(12) **EUROPÄISCHE PATENTSCHRIFT**

(45) Veröffentlichungstag und Bekanntmachung des Hinweises auf die Patenterteilung:
**01.07.2026   Patentblatt 2026/27**

(21) Anmeldenummer: **22818771.2**

(22) Anmeldetag: **21.11.2022**

(51) Internationale Patentklassifikation (IPC):
*G01N 27/406* (2006.01)

(52) Gemeinsame Patentklassifikation (CPC):
**G01N 27/4067;** G01N 27/4074

(86) Internationale Anmeldenummer:
**PCT/EP2022/082561**

(87) Internationale Veröffentlichungsnummer:
**WO 2023/117237 (29.06.2023 Gazette 2023/26)**

(54) **VERFAHREN ZUM AUFHEIZEN EINES ABGASSENSORS**

METHOD FOR HEATING AN EXHAUST GAS SENSOR

PROCÉDÉ DE CHAUFFAGE D'UN CAPTEUR DE GAZ D'ÉCHAPPEMENT

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **22.12.2021   DE 102021214880**

(43) Veröffentlichungstag der Anmeldung:
**30.10.2024   Patentblatt 2024/44**

(73) Patentinhaber: **Robert Bosch GmbH**
**70442 Stuttgart (DE)**

(72) Erfinder: **SCHWAERZLE, Andreas**
**70563 Stuttgart (DE)**

(56) Entgegenhaltungen:
**EP-B1- 2 625 580       DE-A1- 102014 217 402**
**DE-A1- 102019 216 042**

## Beschreibung

Stand der Technik

Zur Einhaltung geltender Abgasvorschriften ist der Einsatz von verschiedenen Abgassensoren für eine Abgasnachbehandlung für moderne Verbrennungskraftmaschinen grundsätzlich unverzichtbar. Zum Einsatz kommen üblicherweise Stickstoffoxid ($NO_x$)-Sensoren, Partikelsensoren, Breitbandlambdasonden und binäre Sprungsonden, wobei letztere grundsätzlich nur in Benzin- oder Gasmotoren verwendet werden. Ein Lambdasignal der Breitbandlambdasonde dient beispielsweise zu einer Dosierung einer Kraftstoffmenge, einer Verbesserung einer Abgasnachbehandlung und einer Überwachung eines Drei-Wege-Katalysatorwirkungsgrades. Anhand der Stickstoffoxid-Sensoren kann grundsätzlich eine Stickstoffoxid- und/oder eine Sauerstoffkonzentration im Abgas ermittelt werden. Beim Einsatz von SCR-Katalysatoren kann zusätzlich eine Ammoniakkonzentration bestimmt werden. In Stickstoffoxid-Speicherkatalysatoren wird hierdurch grundsätzlich eine Beladung, bzw. ein Ende einer Einspeichermöglichkeit detektiert, während bei SCR-Katalysatoren grundsätzlich eine genaue Dosierung einer Harnstoff-WasserLösung erfolgt.

Die genannten Abgassensoren sind grundsätzlich mit Heizelementen versehen, um die jeweilige Funktionsweise sicherzustellen. Das Heizelement des Partikelsensors dient grundsätzlich zur Regeneration eines Sensorelements des Partikelsensors, bei der durch Erwärmen ein Abbrennen von Ruß erfolgt. Das Heizelement wird hier grundsätzlich nur instationär betrieben. Die weiteren Sensoren funktionieren grundsätzlich nur bei einer hinreichend hohen Arbeitstemperatur einer Sensorkeramik und werden daher grundsätzlich kontinuierlich auf eine spezifizierte Zieltemperatur beheizt.

Die Aufheizphase der Sensoren wird grundsätzlich anhand eines in der technischen Kundendokumentation definierten Aufheizprofils in Form eines Spannungsverlaufs festgelegt. Da eine Spannungsversorgung, welche meist der Bordnetzspannung entspricht, selbst typischerweise nicht geregelt werden kann, wird eine gewünschte Effektivspannung grundsätzlich durch eine Heizer-Endstufe mittels Tastverhältnis sichergestellt.

Zur Sicherstellung des Überhitzungsschutzes des Sensors wird grundsätzlich eine maximale Aufheizzeit definiert. Ist kein gültiges Temperatursignal verfügbar, muss die Sondenheizung nach Ablauf dieser Zeit grundsätzlich abgeschaltet, beziehungsweise in einen sicheren Betriebsmodus bei deutlich reduzierter effektiver Heizerspannung versetzt werden. Eine angegebene Maximalzeit berücksichtigt grundsätzlich eine Fertigungsstreuung des Heizerwiderstandes sowie kritische Umgebungsbedingungen bei einer spezifizierten Heizerrampe und ist typischerweise für eine Batteriespannung oberhalb von 12V ausgelegt. Die tatsächlich benötigte Aufheizzeit des Sensors kann hiervon beispielsweise aufgrund niedriger Umgebungstemperaturen, langer Schubphasen und reduzierter Batteriespannung jedoch deutlich abweichen. Weitere Einflussfaktoren können beispielsweise eine Einbauposition des Sensors, eine Restfeuchte sowie ein Wasser im Abgastrakt sein.

Grundsätzlich ist bekannt, wie das Aufheizverfahren bei einer reduzierten Batteriespannung anzupassen ist. Hierbei wird eine Aufheizzeit in Abhängigkeit der Batteriespannung vorgegeben, wobei die Aufheizzeit mit $t \sim U^2$ in etwa proportional zum Quadrat der Spannung verläuft. Weitere Einflussgrößen auf die tatsächliche Sensortemperatur werden in der Aufheizphase grundsätzlich vernachlässigt.

Einige Diagnosen eines beheizten Abgassensors können grundsätzlich nur bei sehr warmer, beziehungsweise heißer Sonde robust durchgeführt werden. Um dies zu ermöglichen, wird grundsätzlich vereinzelt eine auf einem Energiemodell basierte Freigabe der Diagnose durchgeführt.

Offenbarung der Erfindung

Es wird daher ein Verfahren zum Aufheizen eines Abgassensors, ein System umfassend mindestens einen Abgassensor und mindestens eine Steuerung, ein Computerprogramm und ein Datenträger vorgeschlagen, welche die oben beschriebenen Nachteile bekannter Vorrichtungen und Verfahren zumindest weitgehend vermeiden. Insbesondere soll schnelleres Aufheizen des Abgassensors unter variablen Rand- und Umgebungsbedingungen und unter Berücksichtigung des Komponentenschutzes ermöglicht werden.

Unter einem "Abgassensor" im Sinne der vorliegenden Erfindung ist grundsätzlich eine beliebige Vorrichtung zu verstehen, welche eingerichtet ist, um mindestens eine Messgröße eines Abgases zu erfassen, beispielsweise eine physikalische und/oder eine chemische Messgröße, insbesondere eine optische und/oder eine elektrische Messgröße. Beispielsweise kann es sich bei dem Abgas um ein Abgas einer Brennkraftmaschine handeln, insbesondere im Kraftfahrzeugbereich. Der Abgassensor kann insbesondere eingerichtet sein, um mindestens ein Sensorsignal zu erzeugen, insbesondere mindestens ein elektrisches Sensorsignal, beispielsweise ein analoges und/oder digitales Sensorsignal.

Der Abgassensor kann insbesondere ausgewählt sein aus der Gruppe bestehend aus: einem Stickstoffoxid-Sensor; einem Partikelsensor; einer Lambdasonde, insbesondere einer Breitbandlambdasonde; einer binären Sprungsonde. Auch andere Ausführungsformen sind grundsätzlich denkbar.

Der Abgassensor kann insbesondere mindestens ein Heizelement umfassen. Das Heizelement kann insbesondere eingerichtet sein, um mindestens eine Komponente des Abgassensors zu heizen.

Insbesondere kann der Abgassensor ein Partikelsensor sein und das Heizelement kann für eine Regeneration des Abgassensors eingerichtet sein, bei welcher durch einen Erwärmungsvorgang ein Abbrennen von Partikeln, insbesondere von Ruß, erfolgt. Hierbei kann das Heizelement insbesondere instationär betrieben werden. Der Partikelsensor kann insbesondere ein integriertes Temperaturmesselement mit einem Messbereich von -40°C bis 950°C aufweisen, insbesondere um eine genaue Steuerung der Regeneration zu ermöglichen.

Weitere Abgassensoren funktionieren grundsätzlich nur bei einer hinreichend hohen Arbeitstemperatur eines keramischen Elements des Abgassensors und werden daher grundsätzlich kontinuierlich auf eine spezifizierte Zieltemperatur beheizt.

Bei den Stickstoffoxid-Sensoren und Lambdasonden wird die Temperatur des keramischen Elements hingegen grundsätzlich über einen Innenwiderstand des keramischen Elements ermittelt. Der Innenwiderstand ist grundsätzlich in Abhängigkeit des jeweiligen keramischen Elements sowie einer verwendeten Auswertelogik, insbesondere einer analogen Schaltung oder einem ASIC, erst ab einer erhöhten Temperatur messbar.

In einem ersten Aspekt der vorliegenden Erfindung wird ein Verfahren zum Aufheizen eines Abgassensors vorgeschlagen.

Das Verfahren umfasst die nachfolgend aufgelisteten Schritte. Das Verfahren kann weitere, nicht genannte Schritte umfassen. Die Schritte können insbesondere nacheinander und zumindest teilweise wiederholt ausgeführt werden.

Das Verfahren umfasst die folgenden Schritte:

a) Bereitstellen eines Energiemodells des Abgassensors, wobei das Energiemodell einen Energieeintrag über eine effektive Heizerspannung des Heizelements und einen Heizerwiderstand des Heizelements beschreibt;
b) Bestimmen einer Energieschwelle;
c) Kontinuierliche Berechnung des Energieeintrags mittels des Energiemodells, wodurch sich ein berechneter Energieeintrag ergibt; und
d) Aufheizen des Abgassensors mittels des Heizelements bis der berechnete Energieeintrag die Energieschwelle erreicht.

Das Verfahren kann insbesondere ein computerimplementiertes Verfahren sein. Der Begriff "computerimplementiert" kann sich insbesondere auf einen Prozess, welcher vollständig oder teilweise unter Verwendung von Datenverarbeitungsmitteln implementiert ist, insbesondere unter Verwendung mindestens eines Prozessors, beziehen.

Wie oben ausgeführt, wird in Schritt a) das Energiemodell bereitgestellt. Das Energiemodell kann einen Aufheizzustand des Abgassensors beschreiben. Das Energiemodell kann auf einer Energiebilanz des Abgassensors basieren.

Mittels des Energiemodells kann der Energieeintrag über die effektive Heizerspannung des Heizelements und den Heizerwiderstand des Heizelements ermittelt werden. Die effektive Heizerspannung kann insbesondere eine Batteriespannung einer Batterie des Heizelements sein oder umfassen. Die effektive Heizerspannung kann mittels eines Tastverhältnisses geändert werden. Unter einem Tastverhältnis ist im Rahmen der vorliegenden Erfindung das Verhältnis einer Impulsdauer zu einer Impulsperiodendauer zu verstehen. Das Tastverhältnis wird als dimensionslose Verhältniszahl mit einem Wert von 0 bis 1 oder 0 % bis 100 % angegeben. Durch Variation des Tastverhältnisses lässt sich beispielsweise der arithmetische Mittelwert der effektiven Heizerspannung ändern. Die effektive Heizerspannung kann sich insbesondere aus einem Produkt von Heizerspannung und Tastverhältnis berechnen lassen.

Das Energiemodell kann weiterhin mindestens einen Parameter berücksichtigen ausgewählt aus der Gruppe bestehend aus: einem konvektiven Energieaustausch zwischen einem Abgas, einem keramischen Element des Abgassensors und/oder einem Gehäuse des Abgassensors; einem konduktiven Energieaustausch zwischen dem keramischen Element des Abgassensors und dem Gehäuse des Abgassensors; einem konduktiven Energieaustausch zwischen dem Gehäuse des Abgassensors und einer äußeren Umgebung des Abgassensors; einer Wärmestrahlung zwischen dem keramischen Element des Abgassensors und dem Gehäuse des Abgassensors; einer Wärmestrahlung zwischen dem keramischen Element des Abgassensors und einem Schutzrohr des Abgassensors. Auch andere Parameter sind grundsätzlich denkbar.

Während der Aufheizphase wirken sich der konvektive Energieaustausch, der konduktive Energieaustausch sowie die Wärmestrahlung typischerweise in Form von Wärmeverlusten an der Sondenkeramik aus und können gegebenenfalls auch als pauschale Verlustleistung berücksichtigt werden. Energieverluste, welche für eine Energiebilanz verwendet werden, können ebenfalls als Funktion der modellierten Energie oder als konstanter Wert vorgegeben werden.

Wie oben ausgeführt, wird in Schritt b) die Energieschwelle auf Basis des Energiemodells bestimmt. Der Begriff "Energieschwelle" bezeichnet grundsätzlich eine Energie, welche einem physikalischen System zugeführt werden muss, um eine bestimmte Reaktion auszulösen. Die Energieschwelle kann, insbesondere in einem realen Betrieb des Abgassensors, mittels eines WPA-Modells und insbesondere unter ungünstigen Umgebungsbedingungen ermittelt werden.

Insbesondere kann die Energieschwelle mittels des WPA-Modells bei einem Kaltstart ermittelt werden. Weiterhin kann die Energieschwelle mittels des WPA-Modells bei kalten Umgebungsbedingungen ermittelt werden. Weiterhin kann die Energieschwelle mittels eines BP-Modells bestimmt werden. Bei dem BP-Modell (Best Performance Modell) handelt es sich grundsätzlich um ein fehlerfreies System. Das fehlerfreie System kann insbesondere entsprechend einer Fertigungstoleranz einen niedrigsten spezifizierten Widerstand des Heizers aufweisen.

Die Energieschwelle kann insbesondere so gewählt werden, dass mit der Energieschwelle ein Temperatur-Zielkorridor erreicht wird. Der Temperatur-Zielkorridor kann durch grenzlagige Sonden bestimmt werden. Mittels des WPA-Modells kann eine untere Temperatur bestimmt werden und mittels des BP-Modells kann eine obere Temperatur bestimmt werden.

Der Begriff Kaltstart bezeichnet grundsätzlich ein Starten eines nicht vorgewärmten Kraftfahrzeugs. Insbesondere können beim Starten sämtliche, insbesondere alle, Komponenten des Kraftfahrzeugs ein identisches Temperaturniveau aufweisen. Insbesondere können sämtliche, insbesondere alle, Temperatursensoren des Kraftfahrzeugs ein identisches Temperaturniveau aufweisen. Insbesondere kann die Lambdasonde bei Kaltstart eine Temperatur von weniger als 50 °C aufweisen.

Bei dem WPA-Modell (Worst Case Acceptable Modell) kann es sich insbesondere um ein fehlerfreies System handeln, welches gealtert ist, d.h. es ist gerade noch in der Lage, die Abgasgrenzwerte einhalten zu können. Es kann sich dabei insbesondere um ein Kraftfahrzeug am Ende seiner Lebenszeit handeln. Anhand eines gealterten Systems werden grundsätzlich auch sämtliche erforderliche Nachweismessungen in einem Fehlersystem für eine Zulassung bei einer Behörde gefahren. Das WPA-Modell kann insbesondere einen grenzwertig hohen Heizerwiderstand des Heizelements berücksichtigen.

Wie oben ausgeführt, wird in Schritt c) des Energieeintrags über eine effektive Heizerspannung des Heizelements und den Heizerwiderstand des Heizelements kontinuierlich berechnet. Unter dem Begriff "kontinuierliche Berechnung" ist im Rahmen der vorliegenden Erfindung zu verstehen, dass der Energieeintrag berechnet wird, sobald ein Steuergerät (englisch: electronic control unit, ECU) betriebsreit ist und eine Software ausgeführt ist. Spezielle Einschalt- und/oder Randbedingungen, die zusätzlich berücksichtigt werden, können entfallen. Es gibt somit keine speziellen Einschalt- und/oder Randbedingungen.

Die Verfahrensschritte a) bis d) können mittels eines Computerprogramms bei Ablauf auf einem Computer oder Computer-Netzwerk durchgeführt werden. wobei Schritt c) gestartet wird, sobald das Computerprogramm in Betrieb ist, d.h. sobald das Computerprogramm läuft. Weiterhin kann Schritt c) in einer Zeitspanne durchgeführt werden, in welcher ein Betrieb des Heizelements möglich wäre. Das Heizelement muss jedoch nicht in Betrieb sein.

Wie oben ausgeführt, wird in Schritt d) der Abgassensor mittels des Heizelements aufgeheizt bis der Energieeintrag die Energieschwelle erreicht. Hieraus ergibt sich eine variable Aufheizzeit. Der Begriff Aufheizzeit bezeichnet grundsätzlich eine Zeitspanne, welche benötigt wird, um ein Element auf eine Solltemperatur aufzuheizen.

Im Folgenden wird eine beispielhafte Berechnung gezeigt:

Eine effektive Heizerspannung $U_{h,eff}$ (in Volt) berechnet sich aus dem Produkt der Heizerspannung $U_h$ (in Volt) und dem Tastverhältnis DC.

$$U_{h,eff} = DC \cdot U_h \qquad (1)$$

Der Heizerstrom $I_h$ (in Ampere) berechnet sich aus der Heizerspannung $U_h$ (in Volt) und dem Heizerwiederstand $R_h$ (in Ohm).

$$I_h = \frac{U_h}{R_h} \qquad (2)$$

Die Heizleistung P berechnet sich aus dem Produkt der effektiven Heizerspannung $U_{h,eff}$ (in Volt) und dem Heizerstrom $I_h$ (in Ampere).

$$P = U_{h,eff} \cdot I_h = \frac{DC \cdot U_h^2}{R_h} \qquad (3)$$

Die Energie $E$ (in Joule) des Abgassensors berechnet sich aus folgendem zeitlichen Integral, wobei $P_h$ der Heizleistung (in Watt) und $P_{hloss}$ einer pauschalisierten Verlustleistung (in Watt) entspricht.

$$E = \int^{t} (P_h - P_{hloss}) \qquad (4)$$

Typische Werte bei einer Zieltemperatur können sein:

$$U_h = 12V$$

$$R_h = 5 \text{ Ohm}$$

$$DC = 0,2$$

$$P_{hloss} = P_h = 5,76 \text{ W}$$

Die Gleichsetzung von $P_{hloss}$ und $P_h$ erfolgt unter Annahme eines energetischen Gleichgewichts.

In einem weiteren Aspekt der vorliegenden Erfindung wird ein System, umfassend mindestens einen Abgassensor und mindestens eine Steuerung vorgeschlagen. Die Steuerung umfasst mindestens einen Prozessor. Die Steuerung ist eingerichtet, um die Verfahrensschritte nach dem Verfahren wie es oben beschrieben wurde oder im Folgenden noch beschrieben wird, durchzuführen.

In einem weiteren Aspekt der vorliegenden Erfindung wird ein Computerprogramm vorgeschlagen, welches eingerichtet ist, um bei Ablauf auf einem Computer oder Computer-Netzwerk das Verfahren wie es oben beschrieben wurde oder im Folgenden noch beschrieben wird, durchzuführen.

In einem weiteren Aspekt der vorliegenden Erfindung wird ein Computerprogramm mit Programmcode-Mitteln vorgeschlagen. Das Computerprogramm ist eingerichtet, um das Verfahren wie es oben beschrieben wurde oder im Folgenden noch beschrieben wird durchzuführen, wenn das Programm auf einem Computer oder Computer-Netzwerk ausgeführt wird.

In einem weiteren Aspekt der vorliegenden Erfindung wird ein Datenträger, auf dem eine Datenstruktur gespeichert ist, vorgeschlagen. Die Datenstruktur ist eingerichtet, um nach einem Laden in einen Arbeits- und/oder Hauptspeicher eines Computers oder Computer-Netzwerkes das Verfahren wie es oben beschrieben wurde oder im Folgenden noch beschrieben wird auszuführen.

In einem weiteren Aspekt der vorliegenden Erfindung wird ein Computerprogramm-Produkt mit auf einem maschinenlesbaren Träger gespeicherten Programmcode-Mitteln vorgeschlagen, um das Verfahren wie es oben beschrieben wurde oder im Folgenden noch beschrieben wird durchzuführen, wenn das Programm auf einem Computer oder ComputerNetzwerk ausgeführt wird.

Dabei wird unter einem Computer-Programmprodukt das Programm als handelbares Produkt verstanden. Es kann grundsätzlich in beliebiger Form vorliegen, so zum Beispiel auf Papier oder einem computerlesbaren Datenträger und kann insbesondere über ein Datenübertragungsnetz verteilt werden. Insbesondere können die Programmcode-Mittel auf einem computerlesbaren Datenträger und/oder einem computerlesbaren Speichermedium gespeichert sein. Die Begriffe "computerlesbarer Datenträger" und "computerlesbares Speichermedium", wie sie hier verwendet werden, können sich insbesondere auf nicht-transitorische Datenspeicher beziehen, beispielsweise auf ein Hardware-Datenspeichermedium, auf welchem Computer-ausführbare Instruktionen gespeichert sind. Der computerlesbare Datenträger oder das computerlesbare Speichermedium können insbesondere ein Speichermedium wie ein Random-Access Memory (RAM) und/oder ein Read-Only Memory (ROM) sein oder umfassen.

In einem weiteren Aspekt der vorliegenden Erfindung wird ein moduliertes Datensignal vorgeschlagen, wobei das modulierte Datensignal von einem Computersystem oder Computernetzwerk ausführbare Instruktionen zum Ausführen eines Verfahrens wie es oben beschrieben wurde oder im Folgenden noch beschrieben wird umfasst.

Das erfindungsgemäße Verfahren und die erfindungsgemäßen Vorrichtungen weisen gegenüber bekannten Verfahren und Vorrichtungen zahlreiche Vorteile auf. Insbesondere kann ein schnelleres Aufheizen der Sonde unter variablen Rand- und Umgebungsbedingungen und unter Berücksichtigung des Komponentenschutzes ermöglicht werden.

Die Grundlage bildet grundsätzlich ein Energiemodell des Abgassensors, welches den Aufheizzustand beschreibt und welches für eine Diagnosefreigabe eingesetzt werden kann. Während in den bekannten Aufheizverfahren grundsätzlich höchstens die Batteriespannung berücksichtigt wird, basiert die Energiemodellierung insbesondere auf einer Energiebilanz des Sensorelements. Durch ein geeignetes Festlegen einer Energie- oder Temperaturschwelle im Energiemodell kann eine erlaubte Aufheizzeit flexibel an die Umgebungsbedingungen angepasst werden und ein sicherer Übergang in den geregelten Betrieb ermöglicht werden.

Durch die Erfindung wird neben den genannten Vorteilen ein Applikationsaufwand grundsätzlich deutlich reduziert. Zudem werden grundsätzlich weniger Parameter benötigt, was einen Speicherbedarf einer Software grundsätzlich verringert. Durch den modellbasierten Ansatz wird grundsätzlich eine Aufheizdauer als Funktion einer Vielzahl an Einflussparametern beschrieben, welches nach heutigem Stand der Technik aufgrund des mehrdimensionalen Lösungsraumes über eine direkte Berücksichtigung per Applikation grundsätzlich nicht abzubilden wäre.

Der Aufheizzustand eines beheizten Abgassensors kann über eine Energiebilanz ermittelt werden. Je nach gewählter Zustandsgröße (Energie oder Temperatur) können insbesondere folgende Einflussgrößen (nicht abschließend) berücksichtigt werden: Energieeintrag als Funktion eines Heizerwiderstandes; konvektiver Energieaustausch zwischen Abgas und einem keramischen Element des Abgassensors, insbesondere einer Sondenkeramik, sowie einem Gehäuse des Abgassensors, insbesondere einem Sondengehäuse; konduktiver Energieaustausch zwischen dem keramischen Element des Abgassensors, insbesondere der Sondenkeramik, und dem Gehäuse des Abgassensors, insbesondere dem Sondengehäuse, sowie dem Gehäuse des Abgassensors, insbesondere dem Sondengehäuse, und einer Umgebung; einer Wärmestrahlung zwischen dem keramischen Element des Abgassensors, insbesondere der Sondenkeramik und dem Gehäuse des Abgassensors, insbesondere dem Sondengehäuse, bzw. einem Schutzrohr.

Während der Aufheizphase wirken sich der konvektive Energieaustausch, der konduktive Energieaustausch sowie die Wärmestrahlung typischerweise in Form von Wärmeverlusten an der Sondenkeramik aus und können gegebenenfalls auch als pauschale Verlustleistung berücksichtigt werden. Ein Verlauf einer effektiven Heizerspannung in der Aufheizphase wird vom Hersteller grundsätzlich unter Berücksichtigung von zulässigen Zugspannungen festgelegt. Eine insbesondere per Applikation variabel zu gestaltende Aufheizdauer kann nun grundsätzlich über eine einfache Festlegung einer geeigneten modellierten Energie- bzw. Temperaturschwelle umgesetzt werden. Bis zu der festgelegten Schwelle kann der Abgassensor grundsätzlich mit maximal erlaubter effektiver Heizerspannung betrieben werden und ein schnellstmöglicher und sicherer Übergang zum geregelten Betrieb kann grundsätzlich umgesetzt werden.

Kurze Beschreibung der Figuren

Weitere optionale Einzelheiten und Merkmale der Erfindung ergeben sich aus der nachfolgenden Beschreibung bevorzugter Ausführungsbeispiele, welche in den Figuren schematisch dargestellt sind.

Es zeigen:

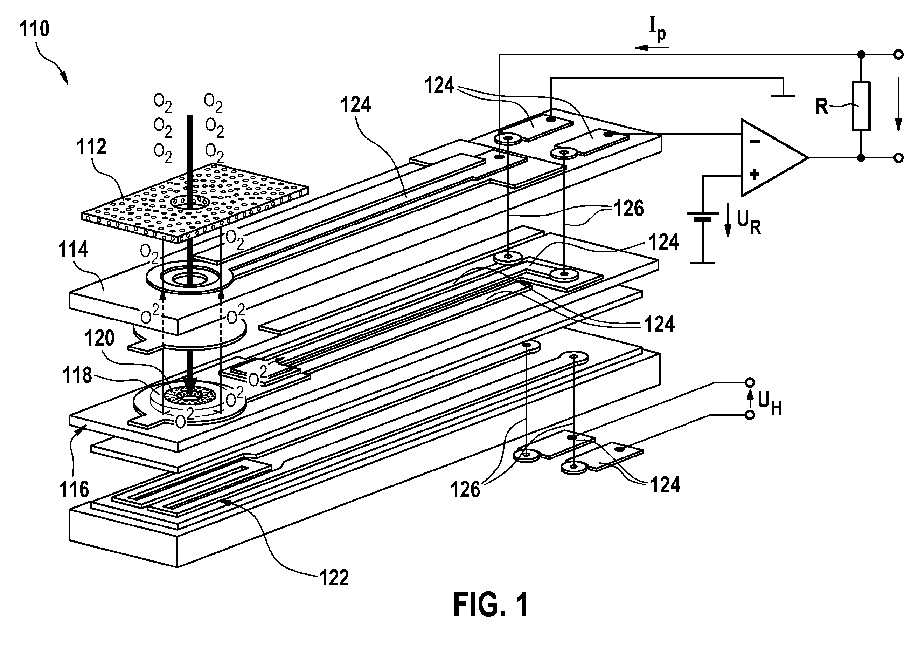

Figur 1: eine Explosionszeichnung einer Breitbandlambdasonde.

Ausführungsformen der Erfindung

In Figur 1 ist eine Explosionszeichnung einer Breitbandlambdasonde 110 dargestellt. Die Breitbandlambdasonde 110 kann Pumpzelle 114 mit einer porösen Schutzschicht 112 aufweisen. Weiterhin kann die Breitbandlambdasonde 110 eine Nernstzelle 116 aufweisen. In Figur 1 sind ein Hohlraum 118 und eine Diffusionsbarriere 120 dargestellt. Weiterhin kann die Breitbandlambdasonde 110 ein Heizelement 122 aufweisen. Die Breitbandlambdasonde 110 kann mehrere Platinelektroden 124 aufweisen. Elektrisch leitende Verbindungen sind in Figur 1 schematisch mit Linien 126 dargestellt. In Figur 1 bezeichnet $I_p$ einen Pumpstrom, $U_R$ eine Referenzspannung , $U_H$ eine Heizspannung und $R$ einen elektrischen Widerstand.

**Patentansprüche**

1.   Verfahren zum Aufheizen eines Abgassensors, wobei der Abgassensor mindestens ein Heizelement umfasst, wobei das Verfahren die folgenden Schritte umfasst:

a) Bereitstellen eines Energiemodells des Abgassensors, wobei das Energiemodell einen Energieeintrag über eine effektive Heizerspannung des Heizelements und einen Heizerwiderstand des Heizelements beschreibt;

b) Bestimmen einer Energieschwelle;

c) Kontinuierliche Berechnung des Energieeintrags mittels des Energiemodells, wodurch sich ein berechneter Energieeintrag ergibt; und

d) Aufheizen des Abgassensors mittels des Heizelements bis der berechnete Energieeintrag die Energieschwelle erreicht.

2.   Verfahren nach dem vorhergehen Anspruch, wobei das Verfahren ein computer-implementiertes Verfahren ist.

3.   Verfahren nach einem der vorhergehenden Ansprüche, wobei die Verfahrensschritte a) bis d) mittels eines Computerprogramms bei Ablauf auf einem Computer oder Computer-Netzwerk durchgeführt werden, wobei Schritt c) gestartet wird, sobald das Computerprogramm in Betrieb ist.

4.   Verfahren nach einem der vorhergehenden Ansprüche, wobei das Energiemodell mindestens einen Parameter berücksichtigt ausgewählt aus der Gruppe bestehend aus: einem konvektiven Energieaustausch zwischen einem Abgas, einem keramischen Element des Abgassensors, und/oder einem Gehäuse des Abgassensors; einem konduktiven Energieaustausch zwischen dem keramischen Element des Abgassensors und dem Gehäuse des Abgassensors; einem konduktiven Energieaustausch zwischen dem Gehäuse des Abgassensors und einer äußeren Umgebung des Abgassensors; einer Wärmestrahlung zwischen dem keramischen Element des Abgassensors und dem Gehäuse des Abgassensors; einer Wärmestrahlung zwischen dem keramischen Element des Abgassensors und einem Schutzrohr des Abgassensors.

**5.** Verfahren nach einem der vorhergehenden Ansprüche, wobei in Schritt d) der Abgassensor mit einer maximal erlaubten effektiven Heizerspannung des Heizelements aufgeheizt wird.

**6.** Verfahren nach einem der vorhergehenden Ansprüche, wobei nach Schritt d) das Heizelement geregelt betrieben wird.

**7.** System, umfassend mindestens einen Abgassensor und mindestens eine Steuerung, wobei die Steuerung mindestens einen Prozessor umfasst, wobei die Steuerung eingerichtet ist, die Verfahrensschritte nach dem Verfahren nach einem der vorhergehenden Ansprüche durchzuführen.

**8.** System nach dem vorhergehenden Anspruch, wobei der Abgassensor ausgewählt ist aus der Gruppe bestehend aus: einem Stickstoffoxid-Sensor; einem Partikelsensor; einer Lambdasonde, insbesondere einer Breitbandlambdasonde; einer binären Sprungsonde.

**9.** Computerprogramm, welches eingerichtet ist, bei Ablauf auf einem Computer oder Computer-Netzwerk das Verfahren nach einem der vorhergehenden Ansprüche durchzuführen.

**10.** Datenträger, auf dem eine Datenstruktur gespeichert ist, welche eingerichtet ist, nach einem Laden in einen Arbeits- und/oder Hauptspeicher eines Computers oder Computer-Netzwerkes das Verfahren nach einem der vorhergehenden Ansprüche auszuführen.

**Claims**

**1.** Method for heating an exhaust gas sensor, wherein the exhaust gas sensor comprises at least one heating element, wherein the method comprises the following steps:

a) providing an energy model of the exhaust gas sensor, wherein the energy model describes an energy input via an effective heater voltage of the heating element and a heater resistance of the heating element;
b) determining an energy threshold;
c) continuously calculating the energy input by means of the energy model, thus resulting in a calculated energy input; and
d) heating the exhaust gas sensor by means of the heating element until the calculated energy input reaches the energy threshold.

**2.** Method according to the preceding claim, wherein the method is a computerimplemented method.

**3.** Method according to either of the preceding claims, wherein method steps a) to d) are carried out by means of a computer program upon execution on a computer or computer network, wherein step c) is started as soon as the computer program is in operation.

**4.** Method according to any of the preceding claims, wherein the energy model takes into account at least one parameter selected from the group consisting of: a convective energy exchange between an exhaust gas, a ceramic element of the exhaust gas sensor, and/or a housing of the exhaust gas sensor; a conductive energy exchange between the ceramic element of the exhaust gas sensor and the housing of the exhaust gas sensor; a conductive energy exchange between the housing of the exhaust gas sensor and an external environment of the exhaust gas sensor; a thermal radiation between the ceramic element of the exhaust gas sensor and the housing of the exhaust gas sensor; a thermal radiation between the ceramic element of the exhaust gas sensor and a protective tube of the exhaust gas sensor.

**5.** Method according to any of the preceding claims, wherein in step d) the exhaust gas sensor is heated with a maximum permitted effective heater voltage of the heating element.

**6.** Method according to any of the preceding claims, wherein after step d) the heating element is operated in a controlled manner.

**7.** System, comprising at least one exhaust gas sensor and at least one controller, wherein the controller comprises at least one processor, wherein the controller is configured to carry out the method steps according to the method according to any of the preceding claims.

**8.** System according to the preceding claim, wherein the exhaust gas sensor is selected from the group consisting of: a nitrogen oxide sensor; a particle sensor; a lambda probe, in particular a wideband lambda probe; a binary step probe.

**9.** Computer program configured to carry out the method according to any of the preceding claims upon execution on a computer or computer network.

**10.** Data carrier on which a data structure is stored, the data structure being configured to perform the method according to any of the preceding claims after loading into a working memory and/or main memory of a computer or computer network.

**Revendications**

**1.** Procédé de chauffage d'un capteur de gaz d'échappement, le capteur de gaz d'échappement comprenant au moins un élément chauffant, le procédé comprenant les étapes suivantes :

a) fourniture d'un modèle énergétique du capteur de gaz d'échappement, le modèle énergétique décrivant un apport d'énergie par l'intermédiaire d'une tension de chauffage effective de l'élément chauffant et d'une résistance de chauffage de l'élément chauffant ;
b) détermination d'un seuil d'énergie ;
c) calcul continu de l'apport d'énergie au moyen du modèle énergétique, aboutissant à un apport d'énergie calculé ; et
d) chauffage du capteur de gaz d'échappement au moyen de l'élément chauffant jusqu'à ce que l'apport d'énergie calculé atteigne le seuil d'énergie.

**2.** Procédé selon la revendication précédente, le procédé étant un procédé mis en œuvre par ordinateur.

**3.** Procédé selon l'une des revendications précédentes, dans lequel les étapes a) à d) du procédé sont mises en œuvre au moyen d'un programme informatique sur un ordinateur ou un réseau informatique, l'étape c) étant lancée dès que le programme informatique est en cours d'exécution.

**4.** Procédé selon l'une des revendications précédentes, dans lequel le modèle énergétique prend en compte au moins un paramètre choisi dans le groupe constitué par : un échange d'énergie par convection entre un gaz d'échappement, un élément de céramique du capteur de gaz d'échappement et/ou un boîtier du capteur de gaz d'échappement ; un échange d'énergie par conduction entre l'élément de céramique du capteur de gaz d'échappement et le boîtier du capteur de gaz d'échappement ; un échange d'énergie par conduction entre le boîtier du capteur de gaz d'échappement et un environnement extérieur au capteur de gaz d'échappement ; un rayonnement thermique entre l'élément de céramique du capteur de gaz d'échappement et le boîtier du capteur de gaz d'échappement ; un rayonnement thermique entre l'élément de céramique du capteur de gaz d'échappement et un tube de protection du capteur de gaz d'échappement.

**5.** Procédé selon l'une des revendications précédentes, dans lequel, à l'étape d), le capteur de gaz d'échappement est chauffé avec une tension de chauffage effective maximale autorisée de l'élément chauffant.

**6.** Procédé selon l'une des revendications précédentes, dans lequel, après l'étape d), l'élément chauffant est utilisé de manière contrôlée.

**7.** Système comprenant au moins un capteur de gaz d'échappement et au moins un dispositif de commande, le dispositif de commande comprenant au moins un processeur, le dispositif de commande étant conçu de façon à mettre en œuvre les étapes du procédé selon l'une des revendications précédentes.

8. Système selon la revendication précédente, dans lequel le capteur de gaz d'échappement est choisi dans le groupe constitué par : un capteur d'oxyde d'azote ; un capteur de particules ; une sonde lambda, en particulier une sonde lambda à large bande ; une sonde à saut binaire.

9. Programme informatique qui est conçu de façon à mettre en œuvre le procédé selon l'une des revendications précédentes lorsqu'il est mis en œuvre sur un ordinateur ou un réseau informatique.

10. Support de données sur lequel est stockée une structure de données qui est configurée de façon à mettre en œuvre le procédé selon l'une des revendications précédentes après qu'elle est chargée dans une mémoire de travail et/ou une mémoire principale d'un ordinateur ou d'un réseau informatique.

**FIG. 1**

EP 4 453 551 B1